# EUROPEAN PATENT APPLICATION

(11) **EP 4 610 041 A1**
(43) Date of publication of application: **03.09.2025**
(21) Application number: 25159362.0
(22) Date of filing: 21.02.2025
(51) Int. Cl.: B32B 1/08, B32B 27/08, B32B 27/30, B32B 27/32

(54) **HEAT-SHRINKABLE TUBE AND WIRE HARNESS**

(30) Priority: 29.02.2024 JP 2024030849
(71) Applicant: Sumitomo Electric Fine Polymer, Inc., Sennan-gun, Osaka 590-0458 (JP); SUMITOMO ELECTRIC INDUSTRIES, LTD., Osaka-shi, Osaka 541-0041 (JP)
(72) Inventor: KUDO, Mayumi, Sennan-gun, 590-0458 (JP); ISHIBASHI, Keiji, Sennan-gun, 590-0458 (JP); FUKUMOTO, Ryota, Osaka-shi, 541-0041 (JP)
(74) Representative: Boult Wade Tennant LLP

(57) **Abstract**

A heat-shrinkable tube of the present disclosure includes an outer layer having a cylindrical shape and having a melting point of 210°C to 260°C, and an inner layer disposed on an inner peripheral surface of the outer layer. The outer layer and the inner layer contain a fluororesin or a fluororubber as a main component, and the inner layer has a shear viscosity of 300 Pa·s to 10000 Pa·s at 250°C and a shear rate of 10/s and a shear viscosity of 3000 Pa·s to 70000 Pa·s at 215°C and a shear rate of 1/s.

## Description

### CROSS REFERENCE TO RELATED APPLICATIONS

This application claims priority based on Japanese Patent Application No. 2024-030849 filed on February 29, 2024, and the entire contents of the Japanese patent application are incorporated herein by reference.

### TECHNICAL FIELD

The present disclosure relates to heat-shrinkable tube and wire harness.

### BACKGROUND

A heat-shrinkable tube having a heat shrinkability in a radial direction is used for covering a connected portion between insulated electric wires, a terminal of wiring, a metal tube, and the like for protection, insulation, waterproofing, corrosion prevention, and the like. When the heat-shrinkable tube is disposed at a connected portion between insulated wires and heated, the heat-shrinkable tube is shrunk along the shape of the connected portion and comes into close contact with the connected portion, thereby protecting the connected portion. When a high degree of adhesion is required for the connected portion for waterproofing or the like, a heat-shrinkable tube in which an inner layer is provided on the inner peripheral surface of an outer layer having a cylindrical shape is used.

For the inner layer of such a heat-shrinkable tube, a hot-melt adhesive such as ethylene-vinyl acetate copolymer (EVA), ethylene-ethyl acrylate copolymer (EEA), or polyamide is used. Such a heat-shrinkable tube is manufactured by extruding an outer layer disposed outside and an inner layer to be disposed on an inner peripheral surface into a tube shape, expanding the diameter of the tube under heating, and cooling the tube to fix the shape (see patent literature 1: Japanese Unexamined Patent Application Publication No. 2000-129042). In addition, in a double tube using fluororesin for the outer layer and the inner layer of a heat-shrinkable tube in order to increase heat resistance, if the fluidity of the inner layer at the time of heat shrinkage is poor, the waterproofness is reduced, and thus, a shear viscosity suitable for increasing the fluidity has been proposed (see patent literature 2: WO 2019/097820). Further, in a connecting component using a heat-shrinkable tube, shear viscosity suitable for controlling the fluidity of a sealing material has been proposed (see patent literature 3: WO 2022/181142).

The heat-shrinkable tube is attached to the adherend by heating the heat-shrinkable tube in a state where the heat-shrinkable tube is disposed so as to cover the outer periphery of the adherend. When the heat-shrinkable tube is heated, the outer layer is thermally shrunk while the inner layer is fluidized. At this time, the fluidized inner layer fills the space between the adherend and the outer layer, and thus, the inner layer is solidified by subsequent cooling, whereby the heat-shrinkable tube is brought into close contact with the adherend.

### SUMMARY

A heat-shrinkable tube of the present disclosure includes an outer layer having a cylindrical shape and having a melting point of 210°C to 260°C, and an inner layer disposed on an inner peripheral surface of the outer layer. The outer layer and the inner layer contain a fluororesin or a fluororubber as a main component, and the inner layer has a shear viscosity of 300 Pa·s to 10000 Pa·s at 250°C and a shear rate of 10/s and a shear viscosity of 3000 Pa·s to 70000 Pa·s at 215°C and a shear rate of 1/s.

### BRIEF DESCRIPTION OF THE DRAWINGS

FIG. 1 is a schematic perspective view of a heat-shrinkable tube in accordance with an embodiment of the present disclosure.
FIG. 2 is an A-A cross-sectional view showing a longitudinal cross-section of the heat-shrinkable tube of FIG. 1.
FIG. 3 is a B-B cross-sectional view showing a cross-section perpendicular to the longitudinal direction of the heat-shrinkable tube of FIG. 1.
FIG. 4 is a schematic side view showing wire harness according to an embodiment of the present disclosure.
FIG. 5 is a schematic cross-sectional view corresponding to FIG. 3 of the wire harness shown in FIG. 4.
FIG. 6 is a schematic view showing a state where conductors exposed from two wires are inserted into a heat-shrinkable tube in a wire harness according to another embodiment of the present disclosure.
FIG. 7 is a schematic diagram of two connection wires adhered by a tube after heat shrinking in the wire harness shown in FIG. 6.
FIG. 8 is a schematic cross-sectional view corresponding to FIG. 2 showing a heat-shrinkable tube according to another embodiment of the present disclosure.

### DETAILED DESCRIPTION

The inner layer is desired to have high fluidity so that the inner layer can be closely adhered to a concave portion or the like of an adherend without a gap at the time of heat shrinkage. However, in the heat-shrinkable tube containing fluororesin or fluororubber having high heat resistance as a main component, when the fluidity of the inner layer is high, there are problems that the inner layer is likely to flow out from the end portion of the tube during heat shrinkage, and that the inner layer is likely to flow out from the outer layer during use at high temperature, resulting in a decrease in sealing properties. Further, when a heat-shrinkable connecting component in which a sealing material is locally provided is used instead of the heat-shrinkable tube, the heat-shrinkable connecting component cannot be used depending on the length of the connected portion, and thus there is a problem in that the use thereof is limited.

An object of the present disclosure is to provide a heat-shrinkable tube which is excellent in adhesion between an inner layer and an adherend during heat shrinkage and in which the inner layer hardly flows out from an outer layer even when used at a high temperature.

### [Description of Embodiments of Present Disclosure]

First, embodiments of the present disclosure will be listed and described.
(1) A heat-shrinkable tube of the present disclosure includes an outer layer having a cylindrical shape and having a melting point of 210°C to 260°C, and an inner layer disposed on an inner peripheral surface of the outer layer. The outer layer and the inner layer contain a fluororesin or a fluororubber as a main component, and the inner layer has a shear viscosity of 300 Pa·s to 10000 Pa·s at 250°C and a shear rate of 10/s and a shear viscosity of 3000 Pa·s to 70000 Pa·s at 215°C and a shear rate of 1/s.

The outer layer and the inner layer contain a fluororesin or a fluororubber as a main component and thus the heat-shrinkable tube has excellent heat resistance. In the heat-shrinkable tube, the outer layer has the melting point of 210°C to 260°C, and thus heat resistance can be secured and damage to an adherend due to heat can be reduced. In the heat-shrinkable tube, the inner layer has the shear viscosity of 300 Pa·s to 10000 Pa·s at 250°C and a shear rate of 10/s and a shear viscosity of 3000 Pa·s to 70000 Pa·s at 215°C and a shear rate of 1/s, whereby the fluidity and durability during heat shrinkage are excellent, and the shape retention during use at high temperature is good. Thus, the inner layer can easily flow during heat shrinkage to ensure adhesion to an adherend, and is less likely to flow out from the outer layer after heat shrinkage. Therefore, even after heat shrinkage, it is possible to maintain the excellent adhesion between the inner layer of the heat-shrinkable tube and the adherend.

The "main component" is a component having the highest content, and for example, refers to a component having a content of 60% by mass or more. The "shear viscosity" is a value measured by a rotational rheometer.

(2) In the above (1), the main component of the outer layer may be an ethylene-tetrafluoroethylene copolymer, and a storage modulus of the outer layer at 250°C to 280°C may be 0.8 MPa to 2.8 MPa. When the main component of the outer layer is an ethylene-tetrafluoroethylene copolymer, the outer layer has good heat resistance. In addition, when the storage modulus of the outer layer at 250°C to 280°C is in the above range, good shrinkage characteristics can be obtained, and shape memory performance is excellent.

(3) In the above (1) or (2), the inner layer may have a melting point of 120°C to 180°C. When the inner layer has the melting point of is 120°C to 180°C, good fluidity can be obtained during heat shrinkage, and the adhesion between the inner layer and an adherend during heat shrinkage can be improved.

(4) In any one of the above (1) to (3), the main component of the inner layer may be an ethylene-tetrafluoroethylene copolymer. When the main component of the inner layer is an ethylene-tetrafluoroethylene copolymer, good fluidity can be obtained during heat shrinkage, and durability and shape retention can be improved.

(5) In any one of the above (1) to (4), the main component of the inner layer may be an ethylene-tetrafluoroethylene copolymer, and a content of polyvinylidene fluoride in the inner layer may be 5% by mass to 40% by mass. When the main component of the inner layer is an ethylene-tetrafluoroethylene copolymer and the content of the polyvinylidene fluoride is 5% by mass to 40% by mass, the fluidity during heat shrinkage can be further enhanced.

(6) In any one of the above (1) to (5), a transmittance at a wavelength of 550 nm may be 10% or more. In the heat-shrinkable tube, when the transmittance at the wavelength of 550 nm of visible light is 10% or more, the visibility of the inside of the heat-shrinkable tube is improved, and the inside of the heat-shrinkable tube can be easily confirmed. As a method for measuring the transmittance at the wavelength of 550 nm, the transmittance can be measured using a spectrophotometer.

(7) In any one of the above (1) to (6), a shrinkage ratio may be 50% or more in the heat-shrinkable tube. When the shrinkage ratio is 50% or more, the adhesion to an adherend can be further improved. The "shrinkage ratio" is calculated by obtaining the difference between the inner diameter of the heat-shrinkable tube before shrinkage and the inner diameter of the heat-shrinkable tube after shrinkage, and dividing the difference by the inner diameter before shrinkage.

(8) Further, a wire harness of the present disclosure is a wire harness includes a plurality of wires each including a conductor and an insulating layer covering an outer peripheral surface of the conductor, and a tube adhering to the plurality of wires. The tube is obtained by using the heat-shrinkable tube according to any one of the above (1) to (7).

Since the wire harness includes the tube obtained by heat-shrinking the heat-shrinkable tube, the wire harness is excellent in adhesion between the inner layer and the adherend during heat shrinkage, and the inner layer is less likely to flow out from the outer layer during use at high temperature. Thus, the state where the tube adheres to and protects the wire can be maintained well. Further, since the wire harness includes the tube obtained by thermally shrinking the heat-shrinkable tube, the wire harness can secure the waterproofness of the connected portion, and thus has good electrical characteristics.

### [Details of Embodiments of Present Disclosure]

Hereinafter, a heat-shrinkable tube and wire harness according to embodiments of the present disclosure will be described with reference to the drawings.

### <Heat-shrinkable Tube>

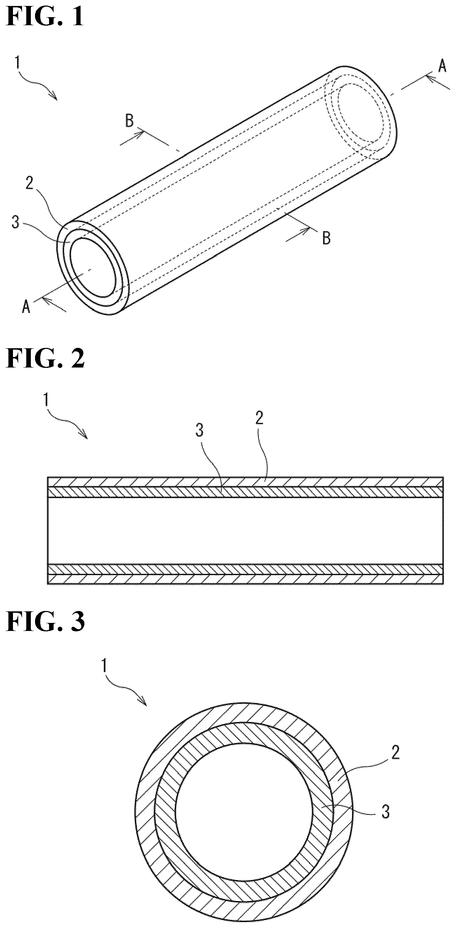

The heat-shrinkable tube is a heat-shrinkable tube having a two layer structure including an outer layer having a cylindrical shape and an inner layer disposed on an inner peripheral surface of the outer layer. The heat-shrinkable tube is used as a covering for protection, insulation, waterproofing, corrosion prevention, and the like of, for example, a connected portion between insulated electric wires, a terminal of wiring, a metal tube, and the like. FIG. 1 is a schematic perspective view of a heat-shrinkable tube in accordance with an embodiment of the present disclosure. FIG. 2 is an A-A cross-sectional view showing a longitudinal cross-section of the heat-shrinkable tube of FIG. 1. FIG. 3 is a B-B cross-sectional view showing a cross-section perpendicular to the longitudinal direction of the heat-shrinkable tube of FIG. 1. As shown in FIGS. 1 to 3, a heat-shrinkable tube 1 of the embodiment includes an outer layer 2 having a cylindrical shape and an inner layer 3 disposed on the inner peripheral surface of outer layer 2.

In heat-shrinkable tube 1, outer layer 2 and inner layer 3 contain a fluororesin or a fluororubber as a main component, and thus heat-shrinkable tube 1 has excellent heat resistance. Examples of the fluororesin include tetrafluoroethylene-ethylene copolymer (ETFE), tetrafluoroethylene-perfluoroalkyl vinyl ether copolymer (PFA), Fluorinated Ethylene Propylene (FEP), and polychlorotrifluoroethylene (PCTFE). Among these, the fluororesin may be a tetrafluoroethylene-ethylene copolymer from the viewpoint of obtaining good fluidity during heat shrinkage.

Heat-shrinkable tube 1 has excellent flexibility by using a fluororubber as a main component. Examples of the fluororubber include vinylidene fluoride-based rubber (FKM), tetrafluoroethylene-propylene-based rubber (FEPM), and tetrafluoroethylene-perfluorovinyl ether-based rubber (FFKM). Among these, vinylidene fluoride rubber having good heat resistance, processability, and price may be used.

The lower limit of the content of the fluororesin or the fluororubber in outer layer 2 and inner layer 3 may be 60% by mass, 70% by mass, 80% by mass, or 90% by mass. When the content of the fluororesin or the fluororubber in outer layer 2 and inner layer 3 is within the above range, the heat-shrinkable tube manufactured has good heat shrinkage force, and thus the adherend can be sufficiently adhered. In addition, heat-shrinkable tube 1 can sufficiently exhibit heat resistance and the like, which are the properties unique to fluororesin or fluororubber.

The average inner diameter and the average thickness of heat-shrinkable tube 1 before heat shrinkage are appropriately selected according to the application and the like.

In general, the heat-shrinkable tube requires confirmation of a shrinkage state, melting of the inner layer, and a connection state of electric wires and the like, and transparency of the tube is required from the viewpoint of improving visibility of the inside of the heat-shrinkable tube. In heat-shrinkable tube 1, the transmittance at the wavelength of 550 nm of visible light may be 10% or more, 20% or more, or 30% or more. In heat-shrinkable tube 1, the transmittance at the wavelength of 550 nm is 10% or more, whereby the visibility of the inside of the heat-shrinkable tube is improved, and the inside of heat-shrinkable tube 1 can be easily confirmed. As a means for adjusting the transmittance, from the viewpoint of maintaining transparency, the transmittance may be adjusted by selecting a resin material or a rubber material rather than adding an inorganic filler.

The upper limit of the secant modulus of heat-shrinkable tube 1 may be 2000 MPa. When the upper limit of the secant modulus is 2000 MPa, the flexibility of heat-shrinkable tube 1 can be improved and the breakage can be reduced. On the other hand, the lower limit of the secant modulus of heat-shrinkable tube 1 may be 300 MPa or 500 MPa. When the lower limit of the secant modulus is 300 MPa, heat-shrinkable tube 1 after shrinkage becomes semi-rigid, and thus the shape retention of the tube can be improved, and the connected portion of the electric wires or the like as the adherend can be protected from mechanical impact.

The shrinkage ratio of heat-shrinkable tube 1 may be 50% or more, 60% or more, or 70% or more. When the shrinkage ratio of heat-shrinkable tube 1 is 50% or more, the adhesion to an adherend can be further improved, and an adherend having a large level difference can be favorably waterproofed.

### [Outer Layer]

Outer layer 2 is formed as a tube whose diameter is reduced by heating. Outer layer 2 contains a fluororesin or a fluororubber as a main component.

In heat-shrinkable tube 1, outer layer 2 has the melting point of 210°C to 260°C, and thus heat resistance can be secured and damage to an adherend due to heat can be suppressed. When the melting point of outer layer 2 is less than 210°C, sufficient heat resistance may not be obtained. On the other hand, when the melting point of outer layer 2 is more than 260°C, heat-shrinkable tube 1 has a high heat shrinkage temperature, and thus the adherend may be easily deteriorated.

The main component of outer layer 2 may be an ethylene-tetrafluoroethylene copolymer, and the storage modulus of outer layer 2 at 250°C to 280°C may be 0.8 MPa to 2.8 MPa. When the main component of outer layer 2 is an ethylene-tetrafluoroethylene copolymer, outer layer 2 has good heat resistance. When the storage modulus of outer layer 2 at 250°C to 280°C is in the above range, good shrinkage characteristics can be obtained, and the shape memory performance is excellent.

Other additives may be added to outer layer 2 as necessary. Examples of such additives include crosslinking aids, antioxidants, flame retardants, copper inhibitors, lubricants, colorants, heat stabilizers, and ultraviolet absorbers.

Outer layer 2 may be a crosslinked body obtained by irradiation with ionizing radiation. Since outer layer 2 is a crosslinked body formed by irradiation with ionizing radiation, the shape of outer layer 2 can be stably maintained for a long period of time even in an environment where stress is applied from the outside or outer layer 2 is exposed to high temperature.

### [Inner Layer]

Inner layer 3 is provided for enhancing the adhesion to an adherend and improving the waterproofness and the like. Inner layer 3 contains a fluororesin or a fluororubber as a main component.

Inner layer 3 has the shear viscosity of 300 Pa·s to 10000 Pa·s at 250°C and a shear rate of 10/s and the shear viscosity of 3000 Pa·s to 70000 Pa·s at 215°C and a shear rate of 1/s, whereby fluidity and durability during heat shrinkage of heat-shrinkable tube 1 are excellent and the shape retention during use at high temperature is good, and thus dripping can be suppressed.
That is, when the shear viscosity of inner layer 3 is within the above range, heat-shrinkable tube 1 has good sealing properties during heat shrinkage and good durability and sealing properties during use at high temperatures.

The lower limit of the shear viscosity of inner layer 3 at 250°C and a shear rate of 10/s is 300 Pa·s, may be 400 Pa·s, and may be 500 Pa·s. When the shear viscosity at a shear rate of 10/s is 300 Pa·s or more, the flowing out of inner layer 3 can be reduced during heat shrinkage, and the sealing performance can be improved. On the other hand, the upper limit of the shear viscosity at 250°C and a shear rate of 10/s is 10000 Pa·s, and may be 9000 Pa·s, 8000 Pa·s, 7000 Pa·s, or 6000 Pa·s. When the shear viscosity at a shear rate of 10/s is 10000 Pa·s or less, the fluidity of inner layer 3 during heat shrinkage of heat-shrinkable tube 1 is improved, and gaps at the end portions of heat-shrinkable tube 1 can be filled, so that the sealing performance can be improved.

The lower limit of the shear viscosity of inner layer 3 at 215°C and a shear rate of 1/s is 3000 Pa·s, may be 4000 Pa·s, and may be 5000 Pa·s. When the shear viscosity at a shear rate of 1/s is 3000 Pa·s or more, the flowing out of inner layer 3 can be reduced during use at high temperature, and the sealing performance can be improved. On the other hand, the upper limit of the shear viscosity at 215°C and a shear rate of 1/s is 70000 Pa·s, and may be 60000 Pa·s or 55000 Pa·s. When the shear viscosity at the shear rate of 1/s is 70000 Pa·s or less, heat-shrinkable tube 1 exhibits durability during use at high temperature and can maintain the sealing effect.

Inner layer 3 can further contain an inorganic filler such as silica, hydrotalcite, or clay to adjust the shear viscosity. The shear viscosity of inner layer 3 can also be adjusted by irradiation with ionizing radiation.

The melting point of inner layer 3 may be 120°C to 180°C. When inner layer 3 has the melting point of 120°C to 180°C, good fluidity can be obtained during heat shrinkage, and the adhesion between inner layer 3 and an adherend during heat shrinkage can be improved.

From the viewpoint of obtaining good fluidity during heat shrinkage, the main component of inner layer 3 may be any one of ethylene-tetrafluoroethylene copolymer (ETFE), acid-modified ethylene-tetrafluoroethylene-hexafluoropropylene copolymer (acid-modified EFEP), polyvinylidene fluoride (PVDF), and vinylidene fluoride-based rubber (FKM). These may be used alone or in combination. Among these, ethylene-tetrafluoroethylene copolymer may be used as the main component of inner layer 3 from the viewpoint of improving the fluidity during heat shrinkage, the durability, and the shape retention.

The main component of inner layer 3 may be an ethylene-tetrafluoroethylene copolymer, and the content of polyvinylidene fluoride in inner layer 3 may be 5% by mass to 40% by mass. When the main component of inner layer 3 is an ethylene-tetrafluoroethylene copolymer and the content of the polyvinylidene fluoride is 5% by mass to 40% by mass, the fluidity during heat shrinkage can be further enhanced. The lower limit of the content of polyvinylidene fluoride in inner layer 3 may be 5% by mass, 6% by mass, or 7% by mass. The upper limit of the content of polyvinylidene fluoride in inner layer 3 may be 40% by mass or 35% by mass.

Other additives may be added to inner layer 3 as necessary. Examples of such additives include crosslinking inhibitors, antioxidants, copper inhibitors, viscosity improvers, deterioration inhibitors, flame retardants, lubricants, colorants, heat stabilizers, ultraviolet absorbers, and tackifiers.

### [Method for Manufacturing Heat-Shrinkable Tube]

The heat-shrinkable tube can be manufactured, for example, by the following steps. (1) A step of preparing an outer layer composition for forming an outer layer. (2) A step of preparing an inner layer composition for forming an inner layer. (3) A step of forming a two layer molded article by extrusion molding the outer layer composition and inner layer composition by using a melt extruder. (4) A step of expanding the diameter of the two layer molded article.

### (1) A step of Preparing Outer Layer Composition

The outer layer composition can be prepared by mixing the fluororesin or fluororubber as the main component with optional additives, for example, by a melt mixer. As the melt mixer, known mixers such as an open roll, a Banbury mixer, a pressure kneader, a single-screw mixer, and a multi-screw mixer can be used.

### (2) A step of Preparing Inner Layer Composition

The inner layer composition can be prepared by mixing the fluororesin or the fluororubber as the main component with optional additives, for example, by a melt mixer. As the melt mixer, the same melt mixer as used in the preparation of the outer layer composition can be used.

### (3) A step of forming a two layer molded article

In this step, the outer layer and the inner layer may be form a two layer molded article by separately extrusion molding, or the inner layer and the outer layer may form a two layer molded article by co-extrusion molding. When the outer layer and the inner layer are separately formed by extrusion molding, there are few restrictions on the combination of the resins of the inner layer and the outer layer, and the manufacturing is easy. On the other hand, when the inner layer and the outer layer are formed by co-extrusion molding, the cost and productivity are excellent, and a tube having a desired length can be easily manufactured. The co-extrusion molded article is formed as a product in which an inner layer corresponding to the inner peripheral surface of the outer layer is disposed by co-extrusion molding the outer layer composition and the inner layer composition using a known melt extrusion molding machine.

The dimensions of the two layer molded article can be designed according to the application and the like.

(4) A step of expanding the diameter of the two layer molded article In this step, the two layer molded article is expanded in diameter to form a heat-shrinkable tube. In the diameter expansion of the two layer molded article, the two layer molded article is expanded to a predetermined inner diameter by a method of introducing compressed air into the inside in a state of being heated to a temperature of a melting point or higher, and then cooled to fix the shape. The diameter of the two layer molded article is expanded, for example, so that the inner diameter of the two layer molded article is about 2 to 4 times. The heat-shrinkable tube is obtained by expanding the diameter of the two layer molded article and fixing the shape of the article in this manner. On the other hand, when the outer layer and the inner layer are separately extruded, the inner layer is disposed on the inner peripheral surface of the outer layer whose diameter is expanded after extrusion molding, and the inner layer is adhered to an adherend, and then the outer layer is shrunk to form a two layer molded article.

In the case where the main component of the outer layer is an ethylene-tetrafluoroethylene copolymer, when the storage modulus of the outer layer at 250°C to 280°C is 0.8 MPa to 2.8 MPa, good radial expandability can be obtained, the wall thickness deviation (wall thickness distribution) can be improved, and the linear change rate can be controlled. Further, by making the shrinkage in the longitudinal direction uniform, the inclination of the end face during shrinkage can be suppressed.

This step may include a step of irradiating the extruded outer layer and inner layer with ionizing radiation. By crosslinking the outer layer by irradiation with ionizing radiation, the shape retention and heat resistance of the outer layer can be improved. Examples of the ionizing radiation to be irradiated include an electron beam and a gamma ray, and an electron beam is suitable because the equipment is relatively easily prepared.

In this way, a heat-shrinkable tube is manufactured which includes an outer layer having a melting point of 210°C to 260°C and an inner layer having a shear viscosity of 300 Pa·s to 10000 Pa·s or at 250°C and a shear rate of 10/s and a shear viscosity of 3000 Pa·s to 70000 Pa·s at 215°C and a shear rate of 1/s.

According to the heat-shrinkable tube, the inner layer can easily flow during heat shrinkage to ensure adhesion to an adherend, and the adhesion between the inner layer and the adherend during heat shrinkage is excellent, and the inner layer is less likely to flow out of the outer layer during use at high temperature.

### <Wire Harness>

The heat-shrinkable tube can be used for protection, insulation, waterproofing, and corrosion prevention of wires such as fluororesin electric wires in which an insulating layer covering a conductor is fluororesin, fluororubber electric wires in which the insulating layer is fluororubber, PE electric wires or PE cables in which the insulating layer is polyethylene (PE), and PVC electric wires or PVC cables in which the insulating layer is polyvinyl chloride (PVC). For example, the heat-shrinkable tube can be applied to wire harness. Specifically, the wire harness includes a plurality of wires each including a conductor and an insulating layer covering an outer peripheral surface of the conductor, and a tube adhering to the plurality of wires, and the tube is obtained by using the heat-shrinkable tube. That is, the tube is obtained by thermally shrinking the heat-shrinkable tube.

Since the wire harness includes the tube obtained by heat-shrinking the heat-shrinkable tube, the wire harness is excellent in adhesion between the inner layer and the adherend during heat shrinkage, and the inner layer is less likely to flow out from the outer layer during use at high temperature. Thus, the state where the tube adheres to and protects the wire can be maintained well. Further, since the wire harness includes the tube obtained by thermally shrinking the heat-shrinkable tube, the wire harness can secure the waterproofness of the connected portion, and thus has good electrical characteristics. The wire harness has good characteristics particularly in a fluororesin electric wire or a fluororubber electric wire.

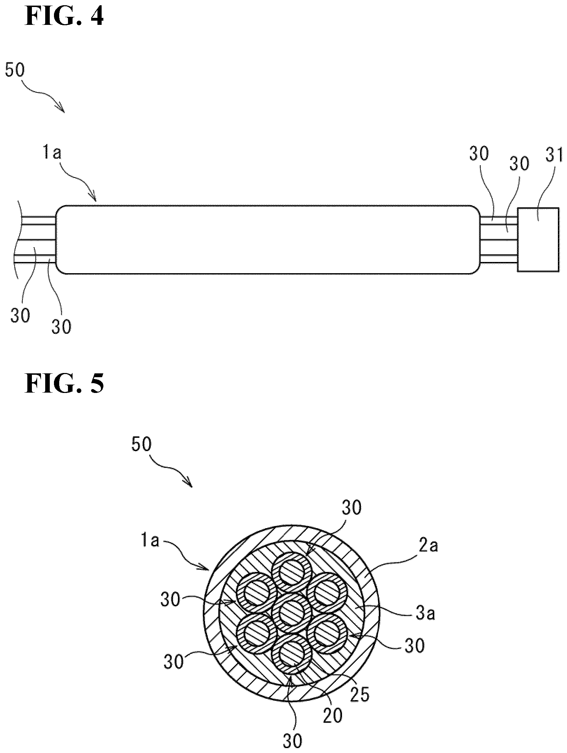

FIGS. 4 and 5 show an example in which heat-shrinkable tube 1 is applied to a wire harness 50. Wire harness 50 shown in FIGS. 4 and 5 is formed by bundling a plurality of wires 30 with a tube 1a formed by thermally shrinking heat-shrinkable tube 1 shown in FIG. 1 and providing a multi-pin connector 31 at the end of the plurality of wires 30. Tube 1a includes an outer layer 2a and an inner layer 3a which are thermally shrunk. Wire 30 is an insulated electric wire or cable such as a fluororesin electric wire, a polyethylene electric wire, or a PVC electric wire. As wire 30, for example, a wire in which an insulating layer 25 covering a conductor 20 contains ethylene-tetrafluoroethylene copolymer as a main component is used. The content of the ethylene-tetrafluoroethylene copolymer in insulating layer 25 is, for example, 50% by mass to 95% by mass. In wire harness 50, tube 1a can contribute to protection, insulation, waterproofing, corrosion prevention, and the like of the connected portion. In wire harness 50, tube 1a not only serves to bind wires 30 but also serves to protect individual wires 30. The number of wires 30 adhering to heat-shrinkable tube 1 is not limited, and heat-shrinkable tube 1 can be used for connection of one wire or for connection of a plurality of wires.

### [Other Embodiments]

The embodiments disclosed herein are to be considered in all respects as illustrative and not restrictive. The scope of the present invention is not limited to the configurations of the above-described embodiments, but is defined by the scope of claims, and is intended to include all modifications within the meaning and scope equivalent to the scope of claims.

The wire harness of the present disclosure can be configured as a so-called flat harness in which a plurality of wires are bundled in a planar shape, or can be configured in other forms.

The wire harness of the present disclosure also includes wire splices. The wire splice is formed by twisting and connecting conductors of a pair of wires and covering the connected portion with a tube formed by thermally shrinking the heat-shrinkable tube. The wire is similar to the wire harness described above. In such a wire splice, the tube can contribute to protection, insulation, waterproofing, corrosion prevention, and the like of the connected portion. The wire splice may be any form in which a heat-shrinkable tube is adhering to a connected portion between wires, and may be a form in which one wire is connected to a plurality of wires, a form in which a plurality of wires are connected to each other, or a form in which end portions of a plurality of wires are collectively connected as in the case of wiring termination, or other forms.

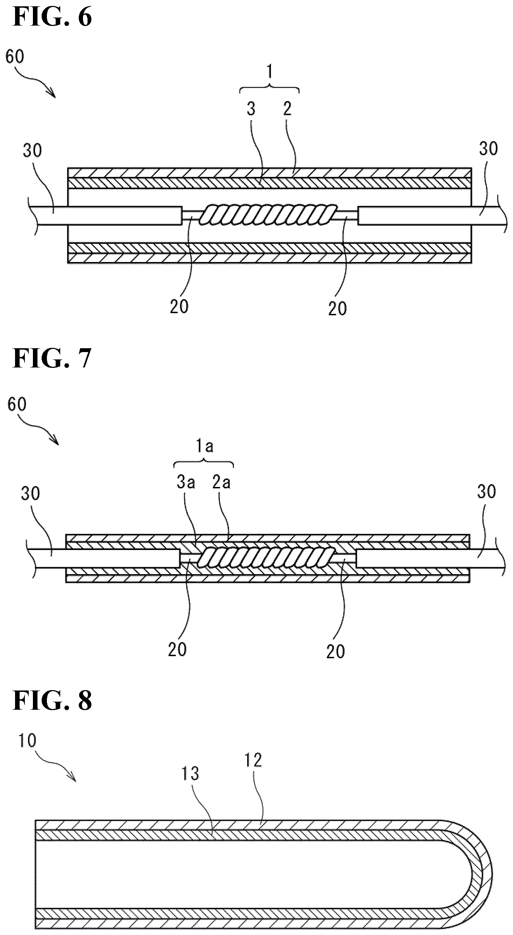

FIGS. 6 and 7 show an example in which heat-shrinkable tube 1 is applied to a wire splice as wire harness according to another embodiment. FIG. 6 shows a state where conductors exposed from two wires are inserted into a heat-shrinkable tube in a wire harness 60, and FIG. 7 shows two connection wires 30 adhered to the tube after shrinkage in wire harness 60. Wire harness 60 of FIG. 7 is formed by twisting and connecting conductors 20 of two wires 30 and covering the connected portion with tube 1a formed by thermally shrinking heat-shrinkable tube 1. Tube 1a includes outer layer 2a and inner layer 3a which are thermally shrunk. In wire harness 60, tube 1a can also contribute to protection, insulation, waterproofing, corrosion prevention, and the like of the connected portion. In wire harness 60, tube 1a not only serves to simply bind two wires 30 but also serves to protect individual wires 30.

The heat-shrinkable tube of the present disclosure is not limited to the heat-shrinkable tube having the outer layer formed in a tube shape as shown in FIGS. 1 to 3, but may be a heat-shrinkable tube 10 having an outer layer 12 formed in a cap shape as shown in FIG. 8, for example. Heat-shrinkable tube 10 is formed by heating and shrinking one end of heat-shrinkable tube 10 to close the end, and disposing an inner layer 13 on the inner peripheral surface of cap-shaped outer layer 12. Heat-shrinkable tube 10 can be suitably used for, for example, a terminal treatment of wiring.

### EXAMPLES

The present invention will be described in more detail below by way of examples. The present invention is not limited to these examples.

### <Test example 1>

Heat-shrinkable tubes No. 1 to No. 15 in Table 1 were produced by selecting raw materials, a step of preparing an outer layer composition, a step of preparing an inner layer composition, a step of forming a two layer molded article, a step of irradiating, and a step of expanding the diameter of the two layer molded article. Table 1 shows the compositions and physical properties of the outer layer and the inner layer. The heat-shrinkable tubes No. 1 to No. 15 were produced by molding the outer layer and the inner layer, respectively, and then fitting the inner layer into the outer layer. The extrusion molding of the outer layer was performed at a die temperature of 280°C, a draw-down ratio of 10, and a linear velocity of 20 m/min. Thereafter, as shown in Table 1, except for No. 14, the outer layer was crosslinked by electron beam irradiation under the condition of the irradiation amount of 60kGy. The irradiated tube was heated from 250°C to 280°C, and the diameter was increased by using a diameter expanding die to apply higher pressure to the inside of the tube than the outside. The diameter expanding die was coated with fluororesin. The melting point and storage modulus at high temperature of the outer layer were adjusted by selecting raw materials and the degree of crosslinking. The extrusion molding of the inner layer was performed at a die temperature of 285°C, a draw-down ratio of 10, and a linear velocity of 6 m/min. Thereafter, the inner layer was crosslinked by electron beam irradiation under the condition of an irradiation dose of 60 kGy to 180 kGy. The shear viscosity of the inner layer was adjusted by selecting the raw material and the degree of crosslinking. Thereafter, a two layer heat-shrinkable tube was prepared by fitting the inner layer into the outer layer. The heat shrinkage was performed by heating at 270°C for 15 minutes. The shear viscosity of the inner layer at an actual temperature of 250°C in the heat-shrunk inner layer, the shear viscosity of the inner layer at 215°C assuming use at high temperature, and the sealing performance of the heat-shrinkable tube are shown for the heat-shrinkable tubes No. 1 to No. 15. The shear viscosity was measured using a rotational rheometer ("MCR302" manufactured by Anton Paar GmbH). In addition, the melting point of the outer layer and the storage modulus [MPa] at 250°C to 280°C are shown. For the inner layer, THV having a melting point of 115°C, EVA having a melting point of 90°C, ETFE having a melting point of 170°C, PVDF having a melting point of 115°C, and FKM which is liquid at room temperature were used. In Table 1, "THV" is tetrafluoroethylene-hexafluoropropylene-vinylidene fluoride copolymer, "PTFE" is polytetrafluoroethylene, and "EVA" is ethylene-vinyl acetate copolymer.

The sealing performance of the heat-shrinkable tube was evaluated by an air leak test. The air leak test was conducted after heating the sample after heat shrinkage at 215°C for 500 hours. The air leak test is a test in which air is put into a test sample in water to confirm whether or not the air leaks. Specifically, the insulating layer of the insulated wire is peeled off, and a heat-shrinkable tube as a sample is shrunk so as to cover a portion where the conductor is exposed. Then, one end of the insulated wire is sealed, and a tube for introducing air is attached to the other end, and the air leakage is evaluated. The air leakage is evaluated by observing that there is no air leakage for 30 seconds under the air pressure of 200 kPa. The evaluation criteria of the sealing performance of the heat-shrinkable tube are as follows. A to C are accepted. A: The pass rate of the air leak test is 90% or more. B: The pass rate of the air leak test is 80% or more and less than 90%. C: The pass rate of the air leak test is 70% or more and less than 80%. D: The pass rate of the air leak test is less than 70%.

The results of the evaluation of the sealing performance of the heat-shrinkable tube are shown in Table 1.

**[Table 1]**

| Test example No. | | 1 | 2 | 3 | 4 | 5 |
|---|---|---|---|---|---|---|
| Outer layer | Composition of outer layer | ETFE | ETFE | ETFE | ETFE | ETFE |
| | Melting point [°C] | 225 | 225 | 225 | 225 | 225 |
| | Storage modulus at 250°C to 280°C [MPa] | 1.0 | 1.0 | 1.0 | 1.0 | 1.0 |
| | Irradiation amount [kGy] | 60 | 60 | 60 | 60 | 60 |
| Inner layer | Composition of inner layer [% by mass] | THV 85 | THV 90 | THV 85 | PVDF 70 | ETFE 70 |
| | | EVA 15 | EVA 10 | EVA 15 | FKM 30 | PVDF 30 |
| | Additive [% by mass] | - | Silica 0.2 | Silica 0.5 | - | - |
| | Irradiation amount [kGy] | 0 | 0 | 0 | 60 | 60 |
| | Shear viscosity of Sealing material at temperature of 250°C and shear rate of 10/s [Pa·s] | 200 | 300 | 200 | 300 | 1000 |
| | Shear viscosity of Sealing material at 215°C and a shear rate of 1/s [Pa·s] | 500 | 2000 | 3000 | 3000 | 10000 |
| Evaluation | Sealing performance of heat-shrinkable tube | D | D | D | C | B |

| Test example No. | | 6 | 7 | 8 | 9 | 10 |
|---|---|---|---|---|---|---|
| Outer layer | Composition of outer layer | ETFE | ETFE | ETFE | ETFE | ETFE |
| | Melting point [°C] | 225 | 225 | 225 | 225 | 225 |
| | Storage modulus at 250°C to 280°C [MPa] | 1.0 | 1.0 | 1.0 | 1.0 | 1.0 |
| | Irradiation amount [kGy] | 60 | 60 | 60 | 60 | 60 |
| Inner layer | Composition of inner layer [% by mass] | ETFE 85 | ETFE 85 | Acid-modified EFEP 85 | ETFE 85 | ETFE 70 |
| | | PVDF 15 | FKM 15 | THV 15 | THV 15 | THV 30 |
| | Additive [% by mass] | - | - | - | - | - |
| | Irradiation amount [kGy] | 60 | 60 | 60 | 60 | 60 |
| | Shear viscosity of Sealing material at temperature of 250°C and shear rate of 10/s [Pa·s] | 2000 | 3000 | 5000 | 8000 | 10000 |
| | Shear viscosity of Sealing material at 215°C and a shear rate of 1/s [Pa·s] | 15000 | 45000 | 55000 | 60000 | 70000 |
| Evaluation | Sealing performance of heat-shrinkable tube | A | A | A | B | C |

| Test example No. | | 11 | 12 | 13 | 14 | 15 |
|---|---|---|---|---|---|---|
| Outer layer | Composition of outer layer | ETFE | ETFE | ETFE | PTFE | PVDF |
| | Melting point [°C] | 225 | 225 | 225 | 323 | 160 |
| | Storage modulus at 250°C to 280°C [MPa] | 1.0 | 1.0 | 1.0 | 25 | - |
| | Irradiation amount [kGy] | 60 | 60 | 60 | - | 60 |
| Inner layer | Composition of inner layer [% by mass] | THV 100 | THV 100 | THV 100 | ETFE 70 | ETFE 70 |
| | | | | | PVDF 30 | PVDF 30 |
| | Additive [% by mass] | - | - | - | - | - |
| | Irradiation amount [kGy] | 60 | 120 | 180 | 60 | 60 |
| | Shear viscosity of Sealing material at temperature of 250°C and shear rate of 10/s [Pa·s] | 10000 | 20000 | 30000 | 1000 | 1000 |
| | Shear viscosity of Sealing material at 215°C and a shear rate of 1/s [Pa·s] | 85000 | 70000 | 100000 | 10000 | 10000 |
| Evaluation | Sealing performance of heat-shrinkable tube | D | D | D | D | D |

As shown in Table 1, good results were obtained in the sealing performances of the heat-shrinkable tubes No. 4 to No. 10 each including the outer layer having a melting point of 210°C to 260°C and the inner layer having a shear viscosity of 300 Pa·s to 10000 Pa·s at 250°C and a shear rate of 10/s and a shear viscosity of 3000 Pa·s to 70000 Pa·s at 215°C and a shear rate of 1/s. The heat-shrinkable tube No. 14 had the outer layer having a high melting point, and thus the shrinkage performance was not sufficient, and the sealing performance of the heat-shrinkable tube was poor. The heat-shrinkable tube No. 15 had the outer layer having a low melting point, and the heat resistance was not sufficient, and the sealing performance of the heat-shrinkable tube was poor.

### <Test Example 2>

Heat-shrinkable tubes No. 16 to No. 23 were produced in the same manner as in Test Example 1, except that the storage modulus of the outer layer was adjusted by selecting the raw material of the ethylene-tetrafluoroethylene copolymer resin in the outer layer and the degree of crosslinking.

The sealing performance of the heat-shrinkable tube was evaluated by the same air leak test as in Test Example 1. The results of the evaluation of the sealing performance of the heat-shrinkable tube are shown in Table 2.

**[Table 2]**

| Test example No. | | 16 | 17 | 18 | 19 | 20 | 21 | 22 | 23 |
|---|---|---|---|---|---|---|---|---|---|
| Outer layer | Composition of outer layer | ETFE | ETFE | ETFE | ETFE | ETFE | ETFE | ETFE | ETFE |
| | Melting point [°C] | 225 | 225 | 225 | 225 | 225 | 225 | 225 | 225 |
| | Storage modulus at 250°C to 280°C [Mpa] | 0.6 | 0.8 | 1.0 | 1.2 | 1.6 | 2.0 | 2.8 | 3.0 |
| Evaluation | Sealing performance of heat-shrinkable tube | C | B | A | A | A | A | B | C |

As shown in Table 2, good sealing performance was obtained by setting the storage modulus at 250°C to 280°C to 0.8 MPa to 2.8 MPa. On the other hand, No. 16 having a storage modulus of less than 0.8 MPa and No. 23 having a storage modulus of more than 2.8 MPa did not exhibit good characteristics as a heat-shrinkable tube.

### <Test Example 3>

Heat-shrinkable tubes No. 24 to No. 28 were produced in the same manner as in Test Example 1 except that the ratio of ETFE and PVDF in the composition of the inner layer was adjusted. For PVDF, a PVDF having a melt flow rate of 93.4 g/10 min at 232°C under a load of 1.2 kg was used.

The sealing performance of the heat-shrinkable tube was evaluated by the same air leak test as in Test Example 1. The results of the evaluation of the sealing performance of the heat-shrinkable tube are shown in Table 3.

**[Table 3]**

| Test example No. | | 24 | 25 | 26 | 27 | 28 |
|---|---|---|---|---|---|---|
| Outer layer | Composition of outer layer | ETFE | ETFE | ETFE | ETFE | ETFE |
| | Melting point [°C] | 225 | 225 | 225 | 225 | 225 |
| | Storage modulus at 250°C to 280°C [Mpa] | 1.0 | 1.0 | 1.0 | 1.0 | 1.0 |
| | Irradiation amount [kGy] | 60 | 60 | 60 | 60 | 60 |
| Inner layer | Composition of inner layer [% by mass] | ETFE 100 | ETFE 95 | ETFE 90 | ETFE 70 | ETFE 60 |
| | | | PVDF 5 | PVDF 10 | PVDF 30 | PVDF 40 |
| | Shear viscosity at temperature of 250°C and shear rate of 10/s [Pa·s] | 2700 | 2500 | 2300 | 1000 | 700 |
| | Shear viscosity at temperature of 215°C and shear rate of 1/s [Pa·s] | 45000 | 40000 | 35000 | 10000 | 6000 |
| Evaluation | Sealing performance of heat-shrinkable tube | C | B | A | B | B |

As shown in Table 3, the sealing performance of the heat-shrinkable tube was improved by the inner layer containing PVDF, and ETFE as the main component.

### <Test Example 4>

The melting point of the inner layer was adjusted by selecting the resin of the inner layer, and heat-shrinkable tubes No. 29 to No. 34 were produced by co-extrusion molding. The extrusion molding was performed at a die temperature of 280°C, a draw-down ratio of 10, and a linear velocity of 20 m/min. Thereafter, the outer layer was crosslinked by electron beam irradiation under the condition of the irradiation amount of 25 kGy to 400 kGy. The irradiated tube was heated from 250°C to 280°C, and the tube was expanded by using an expanding die to apply higher pressure to the inside of the tube than the outside. The expansion die was the one coated with fluororesin.

The sealing performance of the heat-shrinkable tube was evaluated by the same air leak test as in Test Example 1. The results of the evaluation of the sealing performance of the heat-shrinkable tube are shown in Table 4.

**[Table 4]**

| Test example No. | | 29 | 30 | 31 | 32 | 33 | 34 |
|---|---|---|---|---|---|---|---|
| Outer layer | Composition of outer layer | ETFE | ETFE | ETFE | ETFE | ETFE | ETFE |
| | Melting point [°C] | 225 | 225 | 225 | 225 | 225 | 225 |
| | Storage modulus at 250°C to 280°C [MPa] | 1.0 | 1.0 | 1.0 | 1.0 | 1.0 | 1.0 |
| Inner layer | Composition of inner layer | THV | PVDF | Acid-modified EFEP | ETFE | ETFE | ETFE |
| | Melting point [°C] | 110 | 120 | 160 | 170 | 180 | 200 |
| Evaluation | Sealing performance of heat-shrinkable tube | C | A | A | B | B | C |

As shown in Table 4, when the inner layer had the melting point of 120°C to 180°C, fluidity was obtained during heat shrinkage, and good results were obtained in the sealing performance of the heat-shrinkable tube.

### <Test Example 5>

Heat-shrinkable tubes Nos. 35 to 38 were produced in the same manner as No. 5 of Test Example 1, except that the crosslinking was performed by electron beam irradiation under the condition of the irradiation amount of 60 kGy so that the resin compositions of the outer layer and the inner layer and the transmittance of the heat-shrinkable tube had the values shown in Table 5.

The evaluation results of the visibility of the inside of the heat-shrinkable tubes of No. 35 to No. 38 are shown in Table 5. The visibility of the inside of the heat-shrinkable tube was evaluated according to the following criteria. A: The inside can be visually recognized well. B: The inside can be visually recognized. C: The inside cannot be visually recognized.

**[Table 5]**

| Test example No. | | 35 | 36 | 37 | 38 |
|---|---|---|---|---|---|
| Outer layer | Composition of outer layer | ETFE | ETFE | ETFE | ETFE |
| | Melting point [°C] | 225 | 225 | 225 | 225 |
| | Storage modulus at 250°C to 280°C [Mpa] | 1.0 | 1.0 | 1.0 | 1.0 |
| Inner layer | Composition of inner layer [% by mass] | ETFE 60 | ETFE 70 | ETFE 80 | ETFE 95 |
| | | PVDF 40 | PVDF 30 | PVDF 20 | PVDF 5 |
| Heat-shrinkable tube | Transmittance [%] | 5 | 10 | 20 | 30 |
| Evaluation | Visibility of inside of heat-shrinkable tube | C | B | B | A |

As shown in Table 5, the heat-shrinkable tubes No. 36 to No. 38, which had a transmittance at the wavelength of 550 nm of 10% or more, had good visibility of the inside of the heat-shrinkable tube.

From the above results, it is found that the inner layer can easily flow during heat shrinkage to ensure adhesion to the adherend, the heat-shrinkable tube is excellent in the adhesion between the inner layer and the adherend during heat shrinkage, and the inner layer is less likely to flow out from the outer layer during use at high temperature.

## Claims

1. A heat-shrinkable tube comprising:
an outer layer having a cylindrical shape and having a melting point of 210°C to 260°C; and
an inner layer disposed on an inner peripheral surface of the outer layer,
wherein the outer layer and the inner layer contain a fluororesin or a fluororubber as a main component, and
the inner layer has a shear viscosity of 300 Pa·s to 10000 Pa·s at 250°C and a shear rate of 10/s and a shear viscosity of 3000 Pa·s to 70000 Pa·s at 215°C and a shear rate of 1/s.

2. The heat-shrinkable tube according to claim 1,
wherein the main component of the outer layer is an ethylene-tetrafluoroethylene copolymer, and
a storage modulus of the outer layer at 250°C to 280°C is 0.8 MPa to 2.8 MPa.

3. The heat-shrinkable tube according to claim 1 or 2, wherein the inner layer has a melting point of 120°C to 180°C.

4. The heat-shrinkable tube according to claim 1 or 2, wherein the main component of the inner layer is an ethylene-tetrafluoroethylene copolymer.

5. The heat-shrinkable tube according to claim 1 or 2,
wherein the main component of the inner layer is an ethylene-tetrafluoroethylene copolymer, and
a content of polyvinylidene fluoride in the inner layer is 5% by mass to 40% by mass.

6. The heat-shrinkable tube according to claim 1 or 2, wherein a transmittance at a wavelength of 550 nm is 10% or more.

7. The heat-shrinkable tube according to claim 1 or 2, wherein a shrinkage ratio is 50% or more.

8. A wire harness comprising:
a plurality of wires each including a conductor and an insulating layer covering an outer peripheral surface of the conductor; and
a tube adhering to the plurality of wires,
wherein the tube is obtained by using the heat-shrinkable tube according to claim 1 or 2.
